# EUROPEAN PATENT SPECIFICATION

(11) **EP 4 007 312 B1**
(45) Date of publication and mention of the grant of the patent: **28.10.2026**
(21) Application number: 21182009.7
(22) Date of filing: 28.06.2021
(51) Int. Cl.: H04W 4/02, G06F 3/16, G06Q 20/32, G06Q 30/06, G06Q 50/12, G10L 15/22, G10L 15/26, G06Q 30/015, H04L 51/222, H04L 51/10, G10L 13/00, G06Q 20/40, G06Q 20/38, G06Q 20/20, G06Q 20/12, H04L 51/02, G06Q 30/0601

(54) **VOICE-BASED PRE-STAGED TRANSACTION PROCESSING**
SPRACHBASIERTE TRANSAKTIONSVERARBEITUNG MIT VORSTUFEN
TRAITEMENT VOCAL DES TRANSACTIONS PRÉÉTABLIES

(30) Priority: 25.11.2020 US 202017105107
(43) Date of publication of application: 01.06.2022
(73) Proprietor: NCR Voyix Corporation, Atlanta, GA 30308 (US)
(72) Inventor: SUMPTER, Jodessiah, Alpharetta, 30005 (US); MCDANIEL, Christian, Atlanta, 30308 (US); ROSE, Kendall Marie, Canton, 48187 (US); THOMPSON, Shaundell D, Loganville, 30052 (US)
(74) Representative: Secerna LLP

(56) References cited:
- US-A1- 2020 184 437
- US-A1- 2020 226 667

## Description

The drive-thru experience is becoming more time consuming for most restaurants. The average time in the drive thru is now 255 seconds to fulfill an order which is up 60 secs from the previous year. This increase can be attributed to increased menu options for the customer to review, increased lines due to additional people ordering in vehicle and incorrect order delays once they arrive at the pickup window. This issue often leads to the abandonment of the line or the user choosing to walk into the restaurant instead. Its estimated that $178 million dollars per 2000 stores is loss at the drive thru window annually.

Additionally, the COVID19 pandemic has dramatically increased pickup and drive-thru orders, since many states have banned indoor dining in an effort to slow the spread of the virus. Restaurants are struggling to handle the volume of orders both from drive-thru orders and pickup orders. Restaurants were not equipped from staffing and technology standpoints to move their primary mode of business from indoor dining to drive-thru and pickup.

Given that some restaurants are no longer allowed to accepted diners or can only accept a reduced volume of diners, many restaurants are searching for ways to improve their ability to handle the volume associated with drive-thru and pickup orders. Furthermore, because restaurants have lost all or nearly all indoor diners due to the pandemic, restaurants are also simultaneously searching for ways to increase order volumes associated with drive-thru and pickup orders. Yet, increasing order volume is challenging for these restaurants when existing customer experiences associated with drive-thru orders and pickup orders were unfavorable to the restaurants even before the pandemic hit.
US patent application published under number 2020/226667 describes a system to order food from a vehicle.
US patent application published under number 2020/184437 describes an apparatus for the automated provision of goods through the use of scanning systems.

In various embodiments, methods and a system for voice-based pre-staged transaction processing are provided.

According to a first aspect of the present invention there is provided a method, comprising: establishing a voice-based natural language session with a user who is operating a user device; determining an establishment and options selected for a pre-staged order with the establishment during the voice-based natural language session; placing the pre-staged order with the establishment on behalf of the user with the options and continuously monitoring location data reported by the user device an order preparation time; and instructing the establishment to begin preparing the pre-staged order for pickup by the user based on the location data reported by the user device; wherein determining (220) further includes: locating (221) a plurality of available establishments and a plurality of available options based on a direction of travel associated with the user device from the location data or based on a desired region communicated by the user during the voice-based natural language session; and communicating the available establishments and the available options to the user through speech during the voice-based natural language session for user selection; wherein locating (221) further includes filtering (222) the available establishments and available options based on a profile associated with the user; and presenting menu items to the user wherein the menu items are determined based on the user's history of ordering and based on trends associated with ordering from establishments within a zone or region where the user is ordering.

Aptly, the method further comprises informing the establishment that the user has arrived at the establishment for pickup of the pre-staged order based on the location data reported by the user device.

Aptly, locating further includes locating the available establishments and available options based on the direction of travel and a rate of travel for the user device calculated from the location data.

Aptly, determining further includes: locating a plurality of available establishments and a plurality of available options based on a desired time for pickup of the pre-staged order communicated by the user during the voice-based natural language session; and communicating the available establishments and the available options to the user through speech during the voice-based natural language session for user selection.

Aptly determining further includes: locating a plurality of available establishments and a plurality of available options based on the location data; providing the available establishments and available options to a Graphical User Interface (GUI) for touch selection by the user during the voice-based natural language session; and simultaneously communicating the available establishments and the available options to the user through speech during the voice-based natural language session for user selection.

Aptly, placing further includes: translating spoken voice of the user associated with the establishment and the options to text; identifying the establishment and the options from the text; and processing an Application Programming Interface (API) associated with the establishment to place the pre-staged order with the options on behalf of the user.

Aptly, placing further includes providing a payment card or a payment service to the establishment for the pre-staged order based on a profile associated with the user.

Aptly, placing further includes: obtaining payment details from the user during the voice-based natural language session; and providing the payment details to the establishment for the pre-staged order.

Aptly, instructing further includes: estimating an order preparation time for the pre-staged order; determining that a time required for the user device at a current location to reach an establishment location for the establishment is at the order preparation time or less than the order preparation time be a threshold amount; and instructing a fulfillment terminal of the establishment at the establishment location to begin preparing the pre-staged order for the user.

Also disclosed is a method, comprising: engaging a consumer in a natural-language voice dialogue for placing a pre-staged order with a restaurant while the consumer is driving within a vehicle with a consumer device; obtaining menu options from the consumer during the natural-language voice dialogue; processing an Application Programming Interface (API) and placing the pre-staged order with an order system associated with the restaurant using the menu options; determining that the consumer device will arrive at the restaurant within a period of time that is equal to an order preparation time for preparing the pre-staged order based on location data associated with the consumer device; and sending a message to a fulfillment terminal of the restaurant to begin preparing the pre-staged order to time arrival of the consumer at the restaurant to substantially coincide with completion of the pre-staged order based on the determining.

Aptly, engaging further includes providing available restaurants for voice selection by the consumer based on a direction of travel of the vehicle, a region provided by the consumer, or a profile of the consumer.

Aptly, obtaining further includes providing available menu items for voice selection by the consumer based on the restaurant selected by the consumer.

Aptly, providing further includes simultaneously providing the available menu items for touch selection by the consumer to a Graphical User Interface (GUI) of the consumer device.

Aptly, processing further includes provide payment details associated with the profile of the consumer for payment of the pre-staged order to the order system.

Aptly, determining further includes estimating the order preparation time based on the restaurant, a time of day, day of week, and pending unfulfilled orders associated with the restaurant.

According to a second aspect of the present invention there is provided a system, comprising: a server comprising a processor and a non-transitory computer-readable storage medium having executable instructions; the executable instructions when executed by the processor from the non-transitory computer-readable storage medium cause the processor to perform operations comprising: initiating a natural-language voice session with the consumer to obtain a pre-staged order from the consumer through a voice dialogue; locating a plurality of available establishments and a plurality of available options based on a direction of travel associated with the user device from location data reported by the user device or based on a desired region communicated by the consumer during the natural-language voice session; communicating the available establishments and the available options to the consumer through speech during the natural-language voice session for consumer selection; presenting menu items to the consumer wherein the menu items are determined based on the consumer's history of ordering and based on trends associated with ordering from establishments within a zone or region where the consumer is ordering; placing the pre-staged order with a selected establishment using selected options provided by the consumer during the natural-language voice session; continuously monitoring an estimated order preparation time and the location data of a user device relative to an establishment location associated with the selected establishment; and sending a message to a terminal associated with the selected establishment when an estimated arrival time of the consumer at the establishment location is equal to or less than the estimated order preparation time by a threshold, wherein the message identifies the pre-staged order and instructs staff of the establishment location to being preparation of the pre-staged order.

Aptly, the executable instructions when executed by the processor from the non-transitory computer-readable storage medium is further configured to cause the processor to perform additional operations comprising: sending a second message to the terminal when the location data indicates that the consumer has arrived at the establishment location.

According to an embodiment, a method for voice-based pre-staged transaction processing is presented. A voice-based natural language session is established with a user who is operating a user device. An establishment and options selected for a pre-staged order with the establishment are determined during the voice-based natural language session. The pre-staged order is placed with the establishment on behalf of the user with the options. The establishment is instructed to begin preparing the pre-staged order for pickup by the user based on location data reported by the user device.

Embodiments of the present invention will now be described hereinafter, by way of example only, with reference to the accompanying drawings in which:
FIG. 1 is a diagram of a system for voice-based pre-staged transaction processing, according to an example embodiment.
FIG. 2 is a diagram of a method for voice-based pre-staged transaction processing, according to an example embodiment.
FIG. 3 is a diagram of another method for voice-based pre-staged transaction processing, according to an example embodiment.

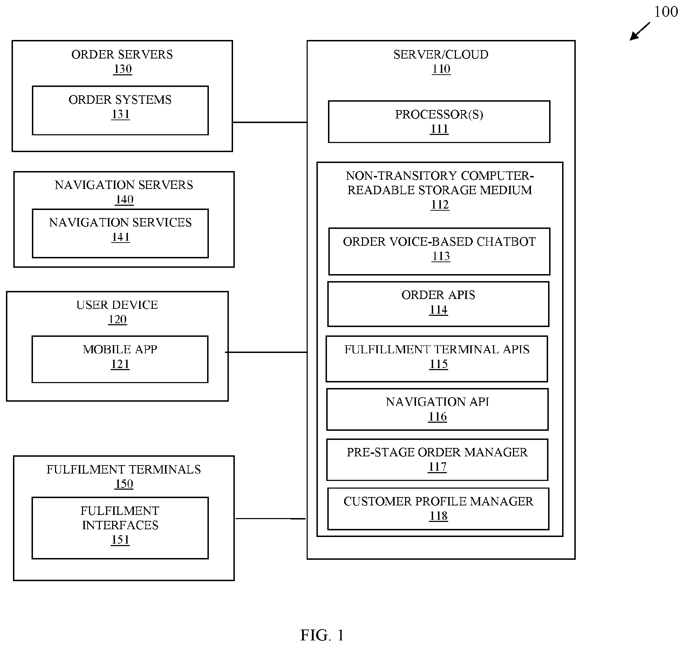

FIG. 1 is a diagram of a system 100 for voice-based pre-staged transaction processing, according to an example embodiment. It is to be noted that the components are shown schematically in greatly simplified form, with only those components relevant to understanding of the embodiments being illustrated.

Furthermore, the various components (that are identified in the FIG. 1) are illustrated and the arrangement of the components is presented for purposes of illustration only. It is to be noted that other arrangements with more or with less components are possible without departing from the teachings of voice-based pre-staged transaction processing, presented herein and below.

As used herein and below, the terms "user," "consumer," "user," and "customer" may be used interchangeably and synonymously. The terms refer to an individual placing an order at a transaction terminal.

As will be demonstrated more clearly herein and below, system 100 permits users to use natural-language and hands fee pre-stage ordering, where the voice orders are translated from audio to text and processed via Application Programming Interfaces (APIs) with the corresponding order systems of retailers. Further, when a location of the user is determined to be in-route to a pickup location, order fulfillment terminals are notified to begin preparing the pre-staged order to time the preparedness of the order with the arrival of the user at the pickup location. The system 100 is particular useful to users placing orders while in vehicles and traveling. The system 100 also allows retailers to efficiently process orders and fulfill orders to thereby reduce drive-thru times and increase timely order fulfillment.

System 100 includes a server/cloud 110, one or more user devices 120, one or more order servers 130, one or more navigation servers 140, and one or more fulfillment terminals 150.

Server/cloud 110 comprises at least one processor 111 and a non-transitory computer-readable storage medium 112. Medium 112 comprises executable instructions representing an order voice-based chatbot 113, order APIs 114, fulfillment terminal APIs 115, a navigation API 116, a pre-stage order manager 117, and a customer profile manager 118. Executable instructions when executed by processor 111 from medium 112 cause processor 111 to perform the processing discussed herein and below with respect to 113-118.

User device 120 comprises a processor and a non-transitory computer-readable storage medium. The medium comprising executable instructions for a mobile app (app) 121. The executable instructions when executed by the processor from the medium cause the processor to perform the processing discussed herein and below with respect to app 121.

Each order server 130 comprises at least one processor and non-transitory computer-readable storage medium. The medium comprising executable instructions for an order system 131. The executable instructions when executed by the processor from the medium cause the processor to perform the processing discussed herein and below with respect to order system 131.

Each navigation server 140 comprises at least one processor and non-transitory computer-readable storage medium. The medium comprising executable instructions for a navigation service 141. The executable instructions when executed by the processor from the medium cause the processor to perform the processing discussed herein and below with respect to navigation service 141.

Each fulfillment terminal 150 comprises at least one processor and non-transitory computer-readable storage medium. The medium comprising executable instructions for a fulfillment interface 151. The executable instructions when executed by the processor from the medium cause the processor to perform the processing discussed herein and below with respect to fulfillment interface 151.

During operation of system 100 voice-based pre-staged orders are processed on behalf of users/customers in manners and embodiments that are now discussed with reference to FIG. 1.

Mobile app 121 presents a natural language based front-end user interface to the user and, optionally, a Graphical User Interface (GUI) for touch-based interaction and/or visual-based confirmation of a natural language voice-based session with server/cloud 110. Mobile app 121 when activated on user device 120 establishes a wireless connection to order voice-based chatbot 113. Mobile app 121 may also interact with location services on device 120 to continuously report location information for the device 120 and a device identifier for device 120 to chatbot 113 and/or pre-stage order manager 117.

Once a connection is made between app 121 and chatbot 113, a natural-language voice session is established. Chatbot 113 is configured to receive voice audio spoken by the user into a microphone associated with user device 120 and convert the audio into text comprising actions based on user intentions; the actions to be processed on behalf of the user. Similarly, Chatbot 113 is configured to receive as input text-based information during the natural language voice session from pre-stage order manager 117. The text-based information is translated by chatbot 113 and communicated to the user during the natural language voice-based session and spoken feedback that is played over a speaker associated with user device 120 to the user.

A user can initiate a connection and a corresponding session with chatbot 113 in a variety of manners. For example, app 121 may listen for a spoken wake-up word causing the session to be established. In another case, app 121 may establish a session with chatbot 113 based on user activation of a GUI option presented within a user-facing GUI when app 121 is initiated on device 120. In yet another situation, when user initiates app 121 on device 120 a session with chatbot 113 is automatically established by app 121 with chatbot 113 and the app 112 autonomously speaks to the user asking the user how can I help or would you like to place a pre-staged order?

Once the app 121 has a session with chatbot 113, the user can speak in natural language a desired order and/or a desired retailer that the user wants the order pre-staged with to chatbot 113. The user may also ask questions of chatbot 113, such as what places near me or in the direction that I am traveling have Chinese food or have cheese conies? Chatbot 113 determines the intention of the user, such as a question about a specific type of food, a specific restaurant, a specific distance to a nearby food establishment, *etc.* The intention can also be an instruction for a specific order, such as order me a double cheeseburger from McDonalds^{®}.

Chatbot 113 determines actions that need to be processed based on the detected intentions from the user's voice statements during the session. The actions are then processed as operations with pre-stage order manager 117. Results returned by 151 are provides as text input information to chatbot 113. Chatbot 113 then translates the text input information and communicates back to the user through speech as a response to the user's initial question or instruction (based on the determined user intention).

Pre-stage order manager 117 manages all text-based actions determined to be necessary by chatbot 113 during the session with the user. Manager 117 interacts with a corresponding order system 131 using order API 114, a corresponding navigation service 141 using navigation API 116, and a corresponding fulfillment interface 151 using fulfillment API 116. Results of actions are returned by 131, 141, and/or 151 and provided by manager 117 for translation into natural spoken language by chatbot 113 for communication to the user during the session as feedback to the initial user's spoken intention.

Manager 117 may also interact with customer profile manager 118 to obtain a profile for a registered user/customer. The profile may be linked to a user device identifier for user device 120. The profile may include a transaction history for transactions of the user, username, user home address, a payment method (payment card and/or payment service), preferred restaurants, preferred food items, disfavored restaurants, disfavored food items, preferred price point for food purchases, *etc.*

Reported device location information for device 120 from app 121 permits manager 117 to identify where the user is located and even a direction of travel for the user (based on changing device locations for device 120). Moreover, the difference in time between two reported device locations, permits manager 117 to compute both a direction of travel for device 120 and a rate or travel or speed that device 120 is traveling. This allows manager 117 to know when the user is stationary or when the user is traveling in a vehicle. The user can also be determined to be at a home address (using the profile from profile manager 118) or can be determined to be traveling in the direction of the home address or away from the home address.

Manager 117 uses actions associated intentions directed to questions posed by the user as determined by chatbot 113 to locate specific restaurants or any restaurant that can provide the information to satisfy the request. This is done by manager 117 using the location information, speed of travel, and direction of travel to interact with navigation services 141 using navigation API 116 to obtain the specific restaurants or any restaurant within a predefined distance or within a distance that will be reached within a predefined amount of time (based on speed and direction of travel). The names, distances, and time to reach information can be provided as text input information to chatbot 113. Chatbot 113 translates to speech and communicates to the user via app 121. Additionally, specific menu items and prices for any given restaurant can be obtained by manager 117 using the corresponding order API 114 and interacting with the corresponding order system 131. Again, menu items and prices for the specific restaurants are provided as text input information to chatbot 113. Chatbot 113 translates to speech and communicates to the user via app 121. This interaction between the user (via app 121), chatbot 113, and manager 117 continues during the voice session as a dialogue with the user.

At some point during the dialogue (note this may be at the very beginning of the session), the user speaks an intention to place a specific order with a specific restaurant. Chatbot 113 provides the order details to manager 117. Manager 117 uses an order API 114 for a needed order system 131 and places a pre-staged order for pickup by the user with the corresponding restaurant using the order details. The order details may include a payment card, or a payment service obtained by manager 117 from a profile of the user via profile manager 118. The order details may also include an estimated or expected pickup time. Manager 117 may calculate the estimated pickup time based on the direction of travel and speed associated with the location data for device 120; alternatively, during the dialogue the user may have communicated the expected pickup time (the user may want to go somewhere else first or get gas for their vehicle before heading to pickup the order.

Manager 117 continues to monitor the order estimated and expected pickup time and location data of device 120 once the order is placed on behalf of the customer. When manager 117 determines that the food preparation time (based on historical data or data provided by the restaurant for orders) will be completed and substantially coincide with the arrival time of the user (based on the location data), manager 117 uses a fulfillment terminal API 115 and sends a message to the corresponding restaurant's fulfillment interface 151 with the order number and an instruction to begin food preparation of the order now as the user/customer is expected to arrive within X minutes. Manager 117 may also send a message to chatbot 113 to communicate to the user that the order is being prepared for pickup by the restaurant along with any pickup location details provided by fulfillment interface to manager 117 during their interaction. For example, the restaurant may have instructions to pickup the order in a predesignated area of its packing lot, which is not associated with any drive-thru and which is not associated with the user leaving the car to come into the restaurant. This allows the restaurant to manage pre-staged orders for pickup separately from its drive-thru customers and separate from customers dining in the restaurant (assuming this is even permitted during COVID19).

An example, process flow utilizing the voice-based pre-staged transaction processing of system 100 may proceed as follows. It is noted that this example process flow is intended to be illustrative and non-limiting as a variety of other voice sessions and voice dialogues associated with other process flows are foreseeable by system 100.

A consumer/user initiates the voice interaction within their vehicle utilizing user device 120 and app 121 to create a voice session with chatbot 113 associated with a voice dialogue with the consumer.

The consumer requests a food or restaurant choice they are interested in from the chatbot 113. Chatbot 113 interacts with manager 117. Manager 117 analyzes the text actions translated by chatbot 113 for the request, analyzes location data returned by app 121 for the request, and interacts with navigation service 141 using API 116 and order systems 131 using API 114. Manager 117 determines specific menu items satisfy the request from a specific restaurant and provides a text feedback information to chatbot 113. Chatbot 113 translates the menu items to speech and communicates to the consumer via app 121 during the session and dialogue. The consumer responds with specific options via voice to chatbot 113. Chatbot 113 provides the options as translated text input information to manager 117. The options are communicated to the proper order system 131 as a pre-staged consumer order by manager 117 and confirmed. The confirmation is sent from manager 117 to chatbot 113 and communicated to the consumer during the voice session and dialogue. Payment information may also be provided by manager 117 for the pre-staged consumer order to order system 131 based on the consumer's profile or based on specific voice-based payment card information provided by the consumer to chatbot 113 during the voice session and voice dialogue.

Manager 117 continues to monitor location data for device 120 and the corresponding pre-staged consumer order. When manager 117 determines that the device 120 is within a predefined range or time for arriving at the restaurant, manager 117 sends a message to the appropriate fulfillment interface 151 stating the order should be prepared now. Any pickup instructions are provided from interface 151 to manager 117, manager 117 communicates to chatbot 113, and chatbot 113 provides the pickup instructions to the consumer as voice during the voice session and voice dialogue. The consumer drives on site and picks up food from the appropriate drive thru area for pre-staged orders or other area defined by the pickup instructions.

Manager 117 detects from the location data of device 120 that the consumer has arrived at the restaurant and sends another message to fulfillment interface 151 informing staff that the consumer associated with the order is onsite for pickup of the order.

In an embodiment, chatbot 113 may presented to the consumer on a display associated with user-device 120 as an animation or an avatar that is synchronized with the auto-generated speech communicated by chatbot 113.

In an embodiment, chatbot 113 is configured to use a spoken language and dialect associated with the user. In an embodiment, during voice training, chatbot 113 detects the user's spoken language and dialect. In an embodiment, the profile for the user includes spoken language identifiers and dialect identifiers.

In an embodiment, the menu items presented to a user either visually or through auto-generated speech is determined based on the user's history of ordering and based on trends associated with ordering from establishments within a zone or region where the user is ordering.

In an embodiment, user device 120 is a phone, a tablet, a laptop, a built-in vehicle computing device (electric or non-electric vehicle with built in computing device), or a wearable processing device.

In an embodiment, the fulfilment terminal is a backend kitchen-based ordering terminal or monitor used by staff to prepare orders within a given restaurant.

In an embodiment, system 100 is processed for pre-staging an order for pickup that is not associated with food take out, such as groceries, or non-food products.

In an embodiment, app 121 translates user spoken voice into text and provides over the established connection to chatbot 113 and chatbot provides feedback as text back to app 121. In this way, the bandwidth associated with audio being transmitted during the voice session can be substantially reduced.

In an embodiment, app 121 is provided as a stand-alone mobile device app, a vehicle system-based app, a browser-based app, or an app integrated into a social media system (Facebook^{®}, Instagram^{®}, Twitter^{®}, *etc*.).

In an embodiment, 113-118 is provided as an enhancement to an existing voice-bases service, such as Amazon^{®} Echo^{®}, Google^{®} Home^{®}, Apple^{®} Siri^{®}, *etc.*

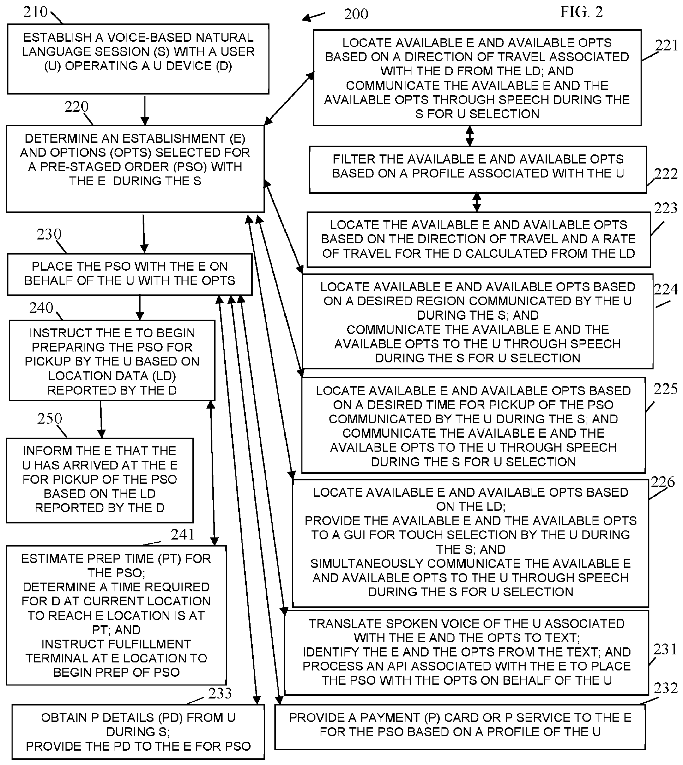

These and other embodiments will now be discussed with reference to FIGS. 2-3.

FIG. 2 is a diagram of a method 200 for voice-based pre-staged transaction processing, according to an example embodiment. The software module(s) that implements the method 200 is referred to as a "pre-staged ordering chatbot." The pre-staged ordering chatbot is implemented as executable instructions programmed and residing within memory and/or a non-transitory computer-readable (processor-readable) storage medium and executed by one or more processors of a device. The processor(s) of the device that executes the pre-staged ordering chatbot are specifically configured and programmed to process the pre-staged ordering chatbot. The pre-staged ordering chatbot may have access to one or more network connections during its processing. The network connections can be wired, wireless, or a combination of wired and wireless.

In an embodiment, the device that executes the pre-staged ordering chatbot is server 110. In an embodiment, the server 110 is a cloud-based processing environment comprising a collection of physical servers cooperating as a single logical server (a cloud 110).

In an embodiment, the pre-staged ordering chatbot is all or some combination of the chatbot 113, order APIs 114, fulfillment terminal APIs 115, navigation API 116, pre-stage order manager 117, and/or customer profile manager 118.

At 210, pre-staged ordering chatbot establishes a voice-based natural language session (session) with a user operating a user device.

At 220, the pre-staged ordering chatbot determines that an establishment and options are selected by the user for a pre-staged order with the establishment during the session.

In an embodiment, at 221, the pre-staged ordering chatbot locates available establishments and available options based on a direction of travel associated with the user device from the location data. The pre-staged ordering chatbot can calculate the direction of travel based on changes in locations reported by the user device. The pre-staged ordering chatbot communicates the available establishments and the available options to the user through speech during the session for user voice selection.

In an embodiment of 221 and at 222, the pre-staged ordering chatbot filters the available establishments and the available options based on a profile associated with the user.

In an embodiment of 222 and at 223, the pre-staged ordering chatbot locates the available establishments and the available options based on the direction of travel and the rate of travel for the user device calculated from the location data (e.g., rate or speed can be calculated based on time of a first location and time of a second location).

In an embodiment, at 224, the pre-staged ordering chatbot locates available establishments and available options based on a desired region (city, mile marker, distance ahead of the user, zip code, *etc*.) communicated by the user during the session. The pre-staged ordering chatbot communicates the available establishments and the available options to the user through speech during the session for user selection.

In an embodiment, at 225, the pre-staged ordering chatbot locates available establishments and available options based on a desired time for pickup of the pre-staged order that is communicated by the user via speech during the session. The pre-staged ordering chatbot communicates the available establishments and the available options to the user through speech during the session for user selection.

In an embodiment, at 226, the pre-staged ordering chatbot locates available establishments and available options based on the location data reported by the user device. The pre-staged ordering chatbot provides the available establishments and the available options to a Graphical User Interface (GUI) for touch selection by the user on the user device during the session. Additionally, the pre-staged ordering chatbot simultaneously communicates the available establishments and available options to the user through speech during the session for an additional mechanism by which the user can make selections of the establishment and the corresponding options.

At 230, the pre-staged ordering chatbot places the pre-staged order with the establishment on behalf of the user with the options.

In an embodiment, at 231, the pre-staged ordering chatbot translates spoken voice of the user associates with the establishment and the options to text and identifies the establishment and the options from the text. The pre-staged ordering chatbot processes an API associated with an order system of the establishment to place the pre-staged order with the options on behalf of the user.

In an embodiment, at 232, the pre-staged ordering chatbot provides a payment card or a payment service to the establishment for payment of the pre-staged order based on a profile associated with the user.

In an embodiment, at 233, the pre-staged ordering chatbot obtains payment details from the user during the session through speech provided by the user for the payment details. The pre-staged ordering chatbot provides the payment details to the establishment as payment for the pre-staged order.

At 240, the pre-staged ordering chatbot instructs the establishment to begin preparing the pre-staged order for pickup by the user based on location data reported by the user device.

In an embodiment, at 241, the pre-staged ordering chatbot estimates an order preparation time required by the establishment for the pre-staged order. The pre-staged ordering chatbot determines a time required for the user device at a current location to reach an establishment location is equal to or is less than the order preparation time by a threshold amount of time. When this is determined, the pre-staged ordering chatbot instructs a fulfillment terminal at the establishment location to being preparing the pre-staged order on behalf of the user.

In an embodiment, at 250, the pre-staged ordering chatbot informs the establishment that the user has arrived at the establishment or a designated establishment location for pickup of the pre-staged order based on location data reported by the user device.

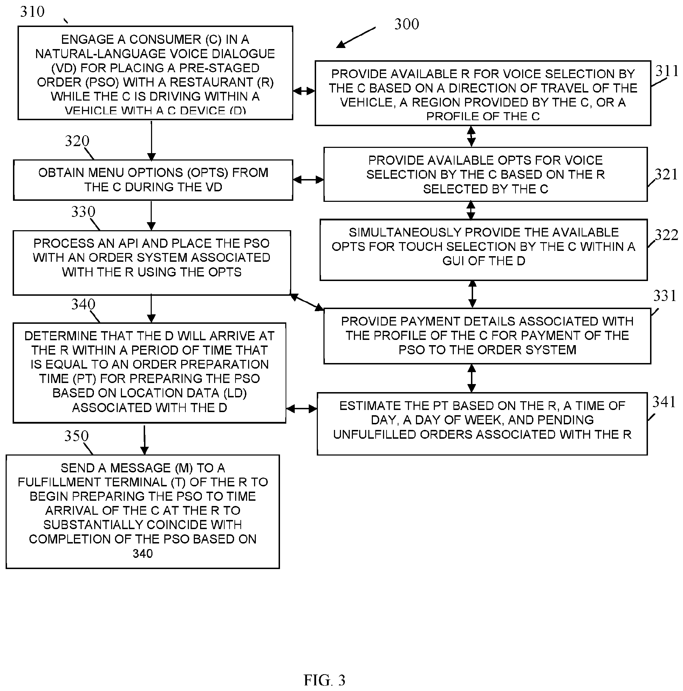

FIG. 3 is a diagram of another method 300 for voice-based pre-staged transaction processing according to an example embodiment. The software module(s) that implements the method 300 is referred to as a "speech and location-based pre-staged order manager." The speech and location-based pre-staged order manager is implemented as executable instructions programmed and residing within memory and/or a non-transitory computer-readable (processor-readable) storage medium and executed by one or more processors of a device. The processors that execute the speech and location-based pre-staged order manager are specifically configured and programmed to process the speech and location-based transaction manager. The speech and location-based pre-staged order manager may have access to one or more network connections during its processing. The network connections can be wired, wireless, or a combination of wired and wireless.

In an embodiment, the device that execute the speech and location-based pre-staged order manager is server 110. In an embodiment, the server 110 is a cloud processing environment (cloud 110).

In an embodiment, the speech and location-based pre-staged order manager is all of, or some combination of: chatbot 113, order APIs 114, fulfillment terminal APIs 115, navigation API 116, pre-stage order manager 117, customer profile manager 118, and/or the method 300.

The speech and location-based pre-staged order manager presents another and, in some ways, enhanced processing perspective of the method 200.

At 310, the speech and location-based pre-staged order manager engages a consumer in a natural-language voice dialogue for placing a pre-staged order with a restaurant while the consumer is driving a vehicle with a consumer device in possession of the consumer or integrated into the vehicle.

In an embodiment, at 311, the speech and location-based pre-staged order manager provides available restaurants for voice selection by the consumer based on a direction of travel of the vehicle, a region provided by the consumer, or a profile of the consumer.

At 320, the speech and location-based pre-staged order manager obtains menu options from the consumer for the restaurant during the voice dialogue.

In an embodiment of 311 and 320, at 321, the speech and location-based pre-staged order manager provides available menu options for voice selection by the consumer based on the restaurant selected by the consumer.

In an embodiment of 321 and at 322, the speech and location-based pre-staged order manager simultaneously provides the available menu options for touch selection by the consumer within a GUI of the consumer device.

At 330, the speech and location-based pre-staged order manager processes an API and places the pre-staged order with an order system associated with the restaurant using the menu options.

In an embodiment of 322 and 330, at 331, the speech and location-based pre-staged order manager provides payment details associated with the profile of the consumer for payment of the pre-staged order to the order system.

At 340, the speech and location-based pre-staged order manager determines that the consumer device will arrive at the restaurant within a period of time that is equal to an order preparation time for preparing the pre-staged order based on location data associated with the consumer device and a restaurant location for the restaurant.

In an embodiment of 331 and 340, at 341, the speech and location-based pre-staged order manager estimates the order preparation time based on the restaurant, a time of day, a day of week, and pending unfulfilled orders associated with the retailer.

At 350, the speech and location-based pre-staged order manager sends a message to a fulfillment terminal of the retailer to begin preparing the pre-staged order to time arrival of the consumer at the restaurant location to substantially coincide with completion of the pre-staged order based on 340.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative. Many other embodiments will be apparent to those of skill in the art upon reviewing the above description. The scope of protection is determined by the claims.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

## Claims

1. A method (200), comprising:
establishing (210) a voice-based natural language session with a user who is operating a user device;
determining (220) an establishment and options selected for a pre-staged order with the establishment during the voice-based natural language session;
placing (230) the pre-staged order with the establishment on behalf of the user with the options, estimating (241) an order preparation time for the pre-staged order, and continuously monitoring location data reported by the user device and the order preparation time for the pre-staged order;
whilst continuously monitoring the location data and the order preparation time, determining that a time required for the user device at a current location to reach an establishment location for the establishment is at the order preparation time or less than the order preparation time by a threshold amount; and
instructing (240) a fulfilment terminal of the establishment at the establishment location to begin preparing the pre-staged order for pickup by the user based on the location data reported by the user device when it is determined that said time is at or less than the order preparation time by the threshold amount;
wherein determining (220) further includes:
locating (221) a plurality of available establishments and a plurality of available options based on a direction of travel associated with the user device from the location data or based on a desired region communicated by the user during the voice-based natural language session; and
communicating the available establishments and the available options to the user through speech during the voice-based natural language session for user selection;
wherein locating (221) further includes filtering (222) the available establishments and available options based on a profile associated with the user; and
presenting menu items to the user wherein the menu items are determined based on the user's history of ordering and based on trends associated with ordering from establishments within a zone or region where the user is ordering.

2. The method (200) of claim 1 further comprising, informing (250) the establishment that the user has arrived at the establishment for pickup of the pre-staged order based on the location data reported by the user device.

3. The method (200) of claim 1, wherein locating (221) further includes locating (223) the available establishments and available options based on the direction of travel and a rate of travel for the user device calculated from the location data.

4. The method (200) of claim 1, wherein determining (220) further includes:
locating (225) a plurality of available establishments and a plurality of available options based on a desired time for pickup of the pre-staged order communicated by the user during the voice-based natural language session; and
communicating the available establishments and the available options to the user through speech during the voice-based natural language session for user selection.

5. The method (200) of claim 1, wherein determining (220) further includes:
locating (226) a plurality of available establishments and a plurality of available options based on the location data;
providing the available establishments and available options to a Graphical User Interface, GUI, for touch selection by the user during the voice-based natural language session; and
simultaneously communicating the available establishments and the available options to the user through speech during the voice-based natural language session for user selection.

6. The method (200) of claim 1, wherein placing (230) further includes:
translating (231) spoken voice of the user associated with the establishment and the options to text;
identifying the establishment and the options from the text; and
processing an Application Programming Interface, API, associated with the establishment to place the pre-staged order with the options on behalf of the user.

7. The method (200) of claim 1, wherein placing (230) further includes providing (232) a payment card or a payment service to the establishment for the pre-staged order based on a profile associated with the user.

8. The method (200) of claim 1, wherein placing (230) further includes:
obtaining (233) payment details from the user during the voice-based natural language session; and
providing the payment details to the establishment for the pre-staged order.

9. A system (100), comprising:
a server (110) comprising a processor (111) and a non-transitory computer-readable storage medium (112) having executable instructions;
the executable instructions including a customer profile manager (118) for providing a profile associated with a consumer, the profile including preferred establishments and options of the consumer;
the executable instructions when executed by the processor (111) from the non-transitory computer-readable storage medium (112) cause the processor (111) to perform the method according to claim 1.

10. The system (100) of claim 9, the executable instructions when executed by the processor (111) from the non-transitory computer-readable storage medium (112) is further configured to cause the processor (111) to perform additional operations comprising:
sending a second message to the terminal when the location data indicates that the consumer has arrived at the establishment location.

## Patentansprüche

1. Verfahren (200), umfassend:
Herstellen (210) einer sprachbasierten Sitzung in natürlicher Sprache mit einem Benutzer, der ein Benutzergerät betreibt;
Bestimmen (220) einer Einrichtung und Optionen, die für einen vorgefertigten Auftrag bei der Einrichtung während der sprachbasierten Sitzung in natürlicher Sprache ausgewählt werden;
Aufgeben (230) des vorgefertigten Auftrags bei der Einrichtung im Auftrag des Benutzers mit den Optionen, Schätzen (241) einer Auftragsvorbereitungszeit für den vorgefertigten Auftrag und kontinuierliches Überwachen der von dem Benutzergerät gemeldeten Standortdaten und der Auftragsvorbereitungszeit für den vorgefertigten Auftrag;
während des kontinuierlichen Überwachens der Standortdaten und der Auftragsvorbereitungszeit, Bestimmen, dass eine Zeit, die das Benutzergerät an einem aktuellen Standort benötigt, um einen Einrichtungsstandort für die Einrichtung zu erreichen, zur Auftragsvorbereitungszeit oder weniger als die Auftragsvorbereitungszeit um einen Schwellenwertbetrag ist; und
Anweisen (240) eines Abwicklungsterminals der Einrichtung an dem Einrichtungsstandort, das Vorbereiten des vorgefertigten Auftrags zum Abholen durch den Benutzer basierend auf den von dem Benutzergerät gemeldeten Standortdaten zu beginnen, wenn bestimmt wird, dass die Zeit um den Schwellenwert bei oder unter der Auftragsvorbereitungszeit liegt;
wobei das Bestimmen (220) ferner Folgendes umfasst:
Lokalisieren (221) einer Vielzahl von verfügbaren Einrichtungen und einer Vielzahl von verfügbaren Optionen basierend auf einer Fahrtrichtung, die mit dem Benutzergerät assoziiert ist, aus den Standortdaten oder basierend auf einer gewünschten Region, die von dem Benutzer während der sprachbasierten Sitzung in natürlicher Sprache kommuniziert wird; und
Übermitteln der verfügbaren Einrichtungen und der verfügbaren Optionen an den Benutzer durch Sprache während der sprachbasierten Sitzung in natürlicher Sprache zur Benutzerauswahl;
wobei das Lokalisieren (221) ferner ein Filtern (222) der verfügbaren Einrichtungen und verfügbaren Optionen basierend auf einem mit dem Benutzer assoziierten Profil umfasst; und
Präsentieren von Menüpunkten für den Benutzer, wobei die Menüpunkte basierend auf dem Bestellverlauf des Benutzers und basierend auf Trends, die mit Bestellungen von Einrichtungen innerhalb einer Zone oder Region, in der der Benutzer bestellt, assoziiert sind, bestimmt werden.

2. Verfahren (200) nach Anspruch 1, ferner umfassend das Informieren (250) der Einrichtung, dass der Benutzer bei der Einrichtung zum Abholen des vorgefertigten Auftrags angekommen ist, basierend auf den von dem Benutzergerät gemeldeten Standortdaten.

3. Verfahren (200) nach Anspruch 1, wobei das Lokalisieren (221) ferner ein Lokalisieren (223) der verfügbaren Einrichtungen und verfügbaren Optionen basierend auf der Fahrtrichtung und einer aus den Standortdaten berechneten Fahrtgeschwindigkeit für das Benutzergerät umfasst.

4. Verfahren (200) nach Anspruch 1, wobei das Bestimmen (220) ferner Folgendes umfasst:
Lokalisieren (225) einer Vielzahl von verfügbaren Einrichtungen und einer Vielzahl von verfügbaren Optionen basierend auf einer gewünschten Zeit für das Abholen des von dem Benutzer während der sprachbasierten Sitzung in natürlicher Sprache kommunizierten vorgefertigten Auftrags; und
Übermitteln der verfügbaren Einrichtungen und der verfügbaren Optionen an den Benutzer durch Sprache während der sprachbasierten Sitzung in natürlicher Sprache zur Benutzerauswahl.

5. Verfahren (200) nach Anspruch 1, wobei das Bestimmen (220) ferner Folgendes umfasst:
Lokalisieren (226) einer Vielzahl von verfügbaren Einrichtungen und einer Vielzahl von verfügbaren Optionen basierend auf den Standortdaten;
Bereitstellen der verfügbaren Einrichtungen und verfügbaren Optionen an eine grafische Benutzeroberfläche, GUI, zur Berührungsauswahl durch den Benutzer während der sprachbasierten Sitzung in natürlicher Sprache; und
gleichzeitiges Kommunizieren der verfügbaren Einrichtungen und der verfügbaren Optionen an den Benutzer durch Sprache während der sprachbasierten Sitzung in natürlicher Sprache zur Benutzerauswahl.

6. Verfahren (200) nach Anspruch 1, wobei das Aufgeben (230) ferner Folgendes umfasst:
Umwandeln (231) von mit der Einrichtung und den Optionen assoziierter gesprochener Sprache des Benutzers in Text;
Identifizieren der Einrichtung und der Optionen aus dem Text; und
Verarbeiten einer Anwendungsprogrammierungsschnittstelle, API, die mit der Einrichtung assoziiert ist, um den vorgefertigten Auftrag mit den Optionen im Namen des Benutzers aufzugeben.

7. Verfahren (200) nach Anspruch 1, wobei das Aufgeben (230) ferner ein Bereitstellen (232) einer Zahlungskarte oder eines Zahlungsdienstes an die Einrichtung für den vorgefertigten Auftrag basierend auf einem mit dem Benutzer assoziierten Profil umfasst.

8. Verfahren (200) nach Anspruch 1, wobei das Aufgeben (230) ferner Folgendes umfasst:
Erhalten (233) von Zahlungsdetails von dem Benutzer während der sprachbasierten Sitzung in natürlicher Sprache; und
Bereitstellen der Zahlungsdaten an die Einrichtung für den vorgefertigten Auftrag.

9. System (100), umfassend:
einen Server (110), umfassend einen Prozessor (111) und ein nicht flüchtiges computerlesbares Speichermedium (112) mit ausführbaren Anweisungen;
wobei die ausführbaren Anweisungen einen Kundenprofilmanager (118) zum Bereitstellen eines Profils, das mit einem Verbraucher assoziiert ist, umfassen, wobei das Profil bevorzugte Einrichtungen und Optionen des Verbrauchers umfasst;
wobei die ausführbaren Anweisungen, wenn sie durch den Prozessor (111) von dem nichtflüchtigen computerlesbaren Speichermedium (112) ausgeführt werden, den Prozessor (111) veranlassen, das Verfahren nach Anspruch 1 auszuführen.

10. System (100) nach Anspruch 9, wobei die ausführbaren Anweisungen, wenn sie durch den Prozessor (111) von dem nichtflüchtigen computerlesbaren Speichermedium (112) ausgeführt werden, ferner eingerichtet sind, den Prozessor (111) zu veranlassen, zusätzliche Vorgänge auszuführen, umfassend:
Senden einer zweiten Nachricht an das Terminal, wenn die Standortdaten angeben, dass der Verbraucher an dem Standort der Einrichtung eingetroffen ist.

## Revendications

1. Procédé (200), comprenant :
la mise en place (210) d'une session vocale en langage naturel avec un utilisateur qui fait fonctionner un dispositif utilisateur ;
la détermination (220) d'un établissement et d'options sélectionnées pour une commande préconstituée auprès de l'établissement pendant la session vocale en langage naturel ;
la soumission (230) de la commande préconstituée à l'établissement pour le compte de l'utilisateur avec les options, l'estimation (241) d'un temps de préparation de commande pour la commande préconstituée, et la surveillance continue des données d'emplacement rapportées par le dispositif utilisateur et du temps de préparation de commande pour la commande préconstituée ;
tout en surveillant en continu les données d'emplacement et le temps de préparation de commande, la détermination qu'un temps requis pour que le dispositif utilisateur situé au niveau d'un emplacement actuel, atteigne un emplacement d'établissement pour l'établissement est égal au temps de préparation de commande ou inférieur au temps de préparation de commande d'une durée seuil ; et
le fait de donner l'instruction (240), à un terminal d'exécution des commandes de l'établissement situé au niveau de l'emplacement d'établissement, de commencer la préparation de la commande préconstituée pour un retrait par l'utilisateur sur la base des données d'emplacement rapportées par le dispositif utilisateur lorsqu'il est déterminé que ledit temps est égal ou inférieur au temps de préparation de commande de la durée seuil ;
dans lequel la détermination (220) comporte en outre :
la localisation (221) d'une pluralité d'établissements disponibles et d'une pluralité d'options disponibles sur la base d'une direction de déplacement associée au dispositif utilisateur à partir des données d'emplacement ou sur la base d'une région souhaitée communiquée par l'utilisateur pendant la session vocale en langage naturel ; et
la communication par la parole des établissements disponibles et des options disponibles à l'utilisateur pendant la session vocale en langage naturel pour la sélection de l'utilisateur ;
dans lequel la localisation (221) comporte en outre le filtrage (222) des établissements disponibles et des options disponibles sur la base d'un profil associé à l'utilisateur ; et
la présentation d'entrées de menu à l'utilisateur, les entrées de menu étant déterminées sur la base de l'historique des commandes de l'utilisateur et sur la base de tendances associées aux commandes passées auprès d'établissements au sein d'une zone ou région où l'utilisateur passe commande.

2. Procédé (200) selon la revendication 1, comprenant en outre le fait d'informer (250) l'établissement que l'utilisateur est arrivé au niveau de l'établissement pour le retrait de la commande préconstituée sur la base des données d'emplacement rapportées par le dispositif d'utilisateur.

3. Procédé (200) selon la revendication 1, dans lequel la localisation (221) comporte en outre la localisation (223) des établissements disponibles et des options disponibles sur la base de la direction de déplacement et d'un taux de déplacement pour le dispositif d'utilisateur calculé à partir des données d'emplacement.

4. Procédé (200) selon la revendication 1, dans lequel la détermination (220) comporte en outre :
la localisation (225) d'une pluralité d'établissements disponibles et d'une pluralité d'options disponibles sur la base d'une heure souhaitée pour le retrait de la commande préconstituée communiquée par l'utilisateur pendant la session vocale en langage naturel ; et
la communication par la parole des établissements disponibles et des options disponibles à l'utilisateur pendant la session vocale en langage naturel pour la sélection de l'utilisateur.

5. Procédé (200) selon la revendication 1, dans lequel la détermination (220) comporte en outre :
la localisation (226) d'une pluralité d'établissements disponibles et d'une pluralité d'options disponibles sur la base des données d'emplacement ;
la fourniture des établissements disponibles et des options disponibles à une interface graphique utilisateur, GUI, pour la sélection tactile par l'utilisateur pendant la session vocale en langage naturel ; et
la communication simultanée par la parole des établissements disponibles et des options disponibles à l'utilisateur pendant la session vocale en langage naturel pour la sélection de l'utilisateur.

6. Procédé (200) selon la revendication 1, dans lequel la soumission (230) comporte en outre :
la traduction (231) en texte des paroles prononcées de l'utilisateur associées à l'établissement et aux options ;
l'identification de l'établissement et des options à partir du texte ; et
le traitement d'une interface de programmation d'application, API, associée à l'établissement pour soumettre la commande préconstituée avec les options pour le compte de l'utilisateur.

7. Procédé (200) selon la revendication 1, dans lequel la soumission (230) comporte en outre la fourniture (232) d'une carte de paiement ou d'un service de paiement à l'établissement pour la commande préconstituée sur la base d'un profil associé à l'utilisateur.

8. Procédé (200) selon la revendication 1, dans lequel la soumission (230) comporte en outre :
l'obtention (233) de détails de paiement auprès de l'utilisateur pendant la session vocale en langage naturel ; et
la fourniture des détails de paiement à l'établissement pour la commande préconstituée.

9. Système (100), comprenant :
un serveur (110) comprenant un processeur (111) et un support de stockage non transitoire lisible par ordinateur (112) ayant des instructions exécutables ;
les instructions exécutables comportant un gestionnaire de profil client (118) destiné à fournir un profil associé à un consommateur, le profil comportant des établissements et des options préférés du consommateur ;
les instructions exécutables, lorsqu'elles sont exécutées par le processeur (111) à partir du support de stockage non transitoire lisible par ordinateur (112), amènent le processeur (111) à réaliser le procédé selon la revendication 1.

10. Système (100) selon la revendication 9, les instructions exécutables, lorsqu'elles sont exécutées par le processeur (111) à partir du support de stockage non transitoire lisible par ordinateur (112), sont configurées pour amener le processeur (111) à réaliser des opérations supplémentaires comprenant :
l'envoi d'un deuxième message au terminal lorsque les données d'emplacement indiquent que le consommateur est arrivé au niveau de l'emplacement d'établissement.
